# FASCICULE DE BREVET EUROPEEN

(11) **EP 3 800 112 B1**
(45) Date de publication et mention de la délivrance du brevet: **15.11.2023**
(21) Numéro de dépôt: 20198319.4
(22) Date de dépôt: 25.09.2020
(51) Int. Cl.: B62D 25/08, B62D 21/15, B62D 43/10

(54) **VÉHICULE AUTOMOBILE COMPRENANT UN SYSTÈME DE PROTECTION DU RÉSERVOIR DE CARBURANT**
KRAFTFAHRZEUG, DAS EIN SCHUTZSYSTEM DES KRAFTSTOFFTANKS UMFASST
MOTOR VEHICLE COMPRISING A SYSTEM FOR PROTECTING THE FUEL TANK

(30) Priorité: 04.10.2019 FR 1911001
(43) Date de publication de la demande: 07.04.2021
(73) Titulaire: Renault s.a.s, 92100 Boulogne Billancourt (FR)
(72) Inventeur: COVALCIC, Mircea-Daniel, BUCURESTI (RO); VALTER, Matei, Bucuresti (RO)
(74) Mandataire: Renault Group

(56) Documents cités:
- WO-A1-2014/064368
- DE-A1-102009 053 979
- DE-A1-102013 007 588
- US-A1- 2010 225 135

## Description

La présente invention concerne le domaine des véhicules automobiles et notamment la structure arrière d'un véhicule automobile.

Plus particulièrement, la présente invention se rapporte aux systèmes de protection du réservoir de carburant présent dans un véhicule automobile, notamment lors d'un choc arrière.

Généralement, un véhicule automobile comprend une roue de secours ou un réservoir GPL logé dans un compartiment dédié sous le plancher du véhicule, entre l'extrémité arrière du véhicule par rapport au sens normal de marche du véhicule et l'essieu arrière du véhicule.

En outre, généralement, le réservoir de carburant du véhicule est situé sous le plancher du véhicule, à proximité de l'essieu arrière et du compartiment dédié.

On peut se référer au document JP 2016 203736-A qui décrit une structure de renforcement de la partie arrière d'un véhicule lors d'un choc. La structure de renforcement est montée à l'intérieur de la caisse et comprend une partie rigide destinée à être en contact et comprimer la roue de secours en cas de choc arrière. L'intégration d'une telle structure nécessite l'utilisation de nombreuses pièces supplémentaires, ce qui engendre une augmentation de masse significative. Un autre exemple de structure de protection de la partie arrière d'un véhicule lors d'un choc est décrit dans le document WO 2014/064368 A1, qui divulgue le préambule de la revendication 1.

Les solutions actuelles proposées ne permettent pas de protéger efficacement le réservoir de carburant lors d'un choc arrière tout en respectant les exigences d'homologation.

Au vu de ce qui précède, l'invention a pour but de diminuer la déformation du réservoir de carburant, et, par conséquent de réduire les risques d'incendie en cas de choc à l'arrière du véhicule, tout en respectant les exigences imposées lors des tests de sécurité passive en évitant une augmentation excessive de la masse du véhicule.

La présente invention a pour objet un véhicule automobile comprenant un plancher comprenant un premier compartiment de réception d'un réservoir de carburant et un deuxième compartiment en amont dudit premier compartiment et séparé dudit compartiment par un essieu arrière auquel sont reliées deux roues arrière.

Le véhicule automobile comprend un système de protection monté sur la surface extérieure du plancher et configuré pour dévier le deuxième compartiment vers le haut lors d'un choc à l'arrière du véhicule, et ainsi éviter à la roue de secours ou au réservoir de GPL de venir à l'encontre du réservoir de carburant.

Avantageusement, le système de protection comprend un limiteur de caisse monté sur la surface inférieure externe du deuxième compartiment et maintenu en position par deux renforts fixés sur l'essieu arrière et deux limiteurs de train arrière montés sur l'essieu arrière.

Le limiteur de caisse permet de limiter l'agression de la roue de secours ou du réservoir GPL sur le réservoir de carburant.

Le limiteur de train arrière permet de transmettre l'effort sur la traverse de train arrière lors d'un choc arrière.

Lors d'un choc à l'arrière du véhicule, le limiteur de caisse tourne autour de l'essieu arrière, ce qui entraîne la translation du deuxième compartiment vers le haut. L'essieu arrière est ainsi utilisé comme nouvelle voie de transmission des efforts afin d'éviter la compression du compartiment arrière.

Le limiteur de caisse présente, par exemple, la forme d'une pièce emboutie comprenant une première partie s'étendant selon la direction longitudinale et fixée sur la surface inférieure du deuxième compartiment et une deuxième partie s'étendant à partir de la première partie selon un axe vertical et fixée sur la surface verticale du deuxième compartiment.

Par exemple, la première partie comprend une partie emboutie s'étendant vers le bas selon l'axe vertical.

La deuxième partie du limiteur de caisse peut être solidaire des deux renforts disposés symétriquement par rapport à l'axe longitudinal du véhicule.

Par exemple, les deux limiteurs de train arrière sont disposés symétriquement par rapport à l'axe longitudinal du véhicule.

Le système de protection peut être fixé par le biais de points de soudure sur le plancher du véhicule.

Selon un mode de réalisation, le deuxième compartiment est configuré pour recevoir une roue de secours.

Selon un autre mode de réalisation, le deuxième compartiment est configuré pour recevoir un réservoir de gaz de pétrole liquéfié, d'acronyme GPL.

D'autres buts, caractéristiques et avantages de l'invention apparaîtront à la lecture de la description suivante, donnée uniquement à titre d'exemple non limitatif, et faite en référence aux dessins annexés sur lesquels :

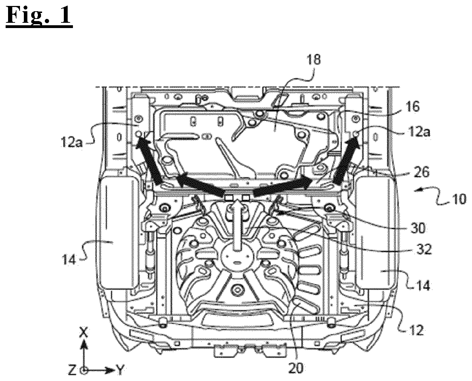

[Fig 1] représente schématiquement une vue de dessous de la partie arrière d'un véhicule automobile comprenant un système de protection du réservoir de carburant selon l'invention ;
[Fig 2]

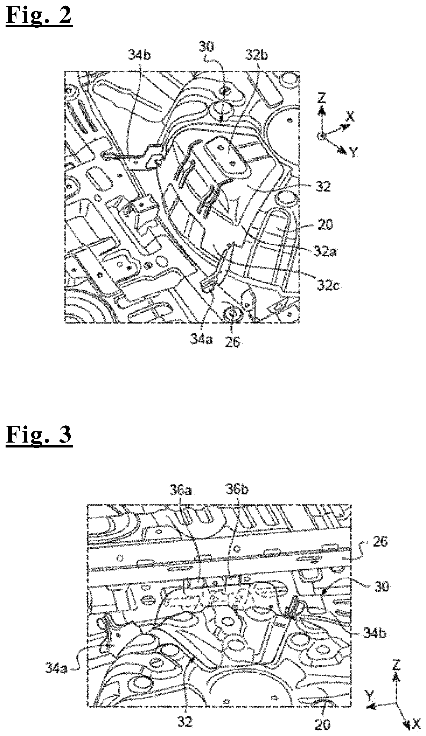

[Fig 3] illustrent des vues de détails du système de protection de la figure 1 ;
[Fig 4a]
   et
[Fig 4b] illustrent des vues en coupe de la partie arrière de la figure 1, respectivement avant et après un choc arrière dans le cas où le compartiment renferme une roue de secours ; et
[Fig 5] illustre une vue en coupe de la partie arrière de la figure 1, après un choc arrière dans le cas où le compartiment renferme un réservoir de GPL.

Dans la description qui suit, les termes « longitudinal », « transversal », « vertical », « avant », « arrière », « gauche » et « droite » sont définis selon le repère orthogonal habituel des véhicules à moteur, représenté sur les dessins, et qui comprend :
- un axe longitudinal X, horizontal et orienté de l'avant vers l'arrière du véhicule ;
- un axe transversal Y, horizontal, perpendiculaire à l'axe longitudinal X et orienté de la gauche vers la droite du véhicule quand le véhicule avance ;
- un axe vertical Z, orthogonal aux axes longitudinal et transversal X et Y.

Sur la figure 1, on a représenté de manière très schématique une partie arrière 10 d'un véhicule automobile, et notamment la vue de dessous du plancher 12 de la partie arrière sur laquelle les roues arrière 14 du véhicule sont visibles.

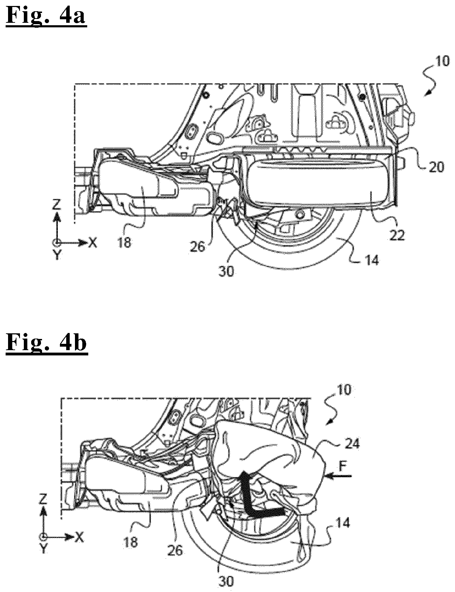

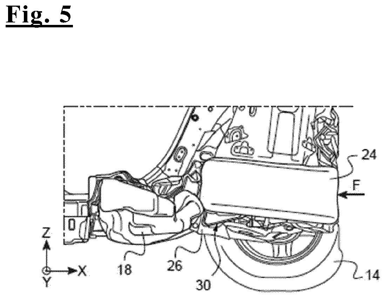

Le plancher 12 comprend un premier compartiment 16 configuré pour recevoir un réservoir de carburant 18 et un deuxième compartiment 20, situé à l'extrémité libre de la partie arrière 10 du véhicule, configuré pour recevoir une roue de secours 22 telle qu'illustrée sur les figures 4a et 4b ou un réservoir de gaz de pétrole liquéfié 24, d'acronyme GPL, tel qu'illustré sur la figure 5.

Le réservoir de carburant 18 est fixé sur des longerons 12a solidaires du plancher 12 en amont du deuxième compartiment 20 en considérant l'axe longitudinal X.

La partie arrière 10 du véhicule comprend en outre un essieu arrière 26 fixé sur la surface inférieure du plancher 12 et auquel sont reliées les roues arrière 14. Tel que visible sur la figure 1, l'essieu arrière 26 recouvre partiellement le réservoir 18 selon un plan comprenant les axes X et Y.

La partie arrière 10 du véhicule automobile comprend en outre un système 30 de protection fixé sur la surface inférieure du plancher 12 et séparant le réservoir de carburant 18 du compartiment arrière 20 destiné à loger une roue de secours 22 ou un réservoir de GPL 24.

Le système 30 de protection est configuré pour dévier le compartiment arrière 20 vers le haut lors d'un choc à l'arrière du véhicule, et ainsi éviter à la roue de secours ou au réservoir de GPL de venir à l'encontre du réservoir de carburant.

A cet effet, le système 30 de protection comprend une pluralité de limiteurs mécaniques montés sous la structure arrière du véhicule automobile.

Le système de protection 30 comprend un limiteur de caisse 32 monté sur la surface inférieure du compartiment arrière 20 et maintenu en position par deux renforts 34a, 34b, et deux limiteurs 36a, 36b de train arrière montés sur l'essieu 26.

Le limiteur de caisse 32 permet de limiter l'agression de la roue de secours ou du réservoir GPL sur le réservoir de carburant 18. Le limiteur de train arrière 36a, 36b permet de transmettre l'effort sur la traverse de train arrière 26 lors d'un choc arrière.

Le limiteur de caisse 32 est sous la forme d'une pièce emboutie comprenant une première partie 32a s'étendant selon la direction longitudinale et fixée sur la surface inférieure du deuxième compartiment 20. La première partie 32a comprend une partie emboutie 32b s'étendant vers le bas selon l'axe Z. Le limiteur de caisse 32 comprend en outre une deuxième partie 32c s'étendant à partir de la première partie 32a selon l'axe vertical Z et fixée sur la surface verticale du deuxième compartiment 20.

La deuxième partie 32c du limiteur de caisse 32 est solidaire des deux renforts 32a, 32b disposés symétriquement par rapport à l'axe longitudinal du véhicule.

Les deux limiteurs de train arrière 36a, 36b sont disposés symétriquement par rapport à l'axe longitudinal du véhicule.

Lors d'un choc à l'arrière du véhicule selon la flèche F illustrée sur les figures 4b et 5, le limiteur de caisse 32 tourne autour de l'essieu arrière 26, ce qui entraîne la translation du deuxième compartiment 20 vers le haut. L'essieu arrière 26 est ainsi utilisé comme nouvelle voie de transmission des efforts afin d'éviter la compression du compartiment arrière 20.

Le système de protection 30 selon l'invention est monté directement sur la surface extérieure du plancher et ne nécessite pas l'ajout de pièces supplémentaires, ce qui permet d'obtenir un système de protection ayant une masse réduite.

Le système de protection 30 est fixé par le biais de points de soudure sur le plancher du véhicule.

Grâce à la présente invention, il est possible de diminuer la déformation du réservoir de carburant, et, par conséquent de réduire les risques d'incendie en cas de choc à l'arrière du véhicule.

Le système de protection tel que décrit permet également de respecter les exigences imposées lors des tests de sécurité passive en évitant une augmentation excessive de la masse du véhicule.

## Revendications

1. Véhicule automobile comprenant un plancher (12) comprenant un premier compartiment (16) de réception d'un réservoir de carburant (18) et un deuxième compartiment (20) en amont dudit premier compartiment (16) et séparé dudit compartiment par un essieu arrière (26) auquel sont reliées deux roues arrières (14), **caractérisé en ce qu'**il comprend un système de protection (30) monté sur la surface extérieure du plancher et configuré pour dévier le deuxième compartiment (20) vers le haut lors d'un choc à l'arrière du véhicule.

2. Véhicule automobile selon la revendication 1, dans lequel le système de protection (30) comprend un limiteur de caisse (32) monté sur la surface inférieure externe du deuxième compartiment (20) et maintenu en position par deux renforts (34a, 34b) fixés sur l'essieu arrière (26) et deux limiteurs (36a, 36b) de train arrière montés sur l'essieu arrière (26).

3. Véhicule automobile selon la revendication 2, dans lequel le limiteur de caisse (32) présente la forme d'une pièce emboutie comprenant une première partie (32a) s'étendant selon la direction longitudinale et fixée sur la surface inférieure du deuxième compartiment (20) et une deuxième partie (32c) s'étendant à partir de la première partie (32a) selon un axe vertical (Z) et fixé sur la surface verticale du deuxième compartiment (20).

4. Véhicule automobile selon la revendication 3, dans lequel la première partie (32a) comprend une partie emboutie (32b) s'étendant vers le bas selon l'axe vertical (Z).

5. Véhicule automobile selon la revendication 3 ou 4, dans lequel la deuxième partie (32c) du limiteur de caisse (32) est solidaire des deux renforts (32a, 32b) disposés symétriquement par rapport à l'axe longitudinal (X) du véhicule.

6. Véhicule automobile selon l'une quelconque des revendications 2 à 5, dans lequel les deux limiteurs de train arrière (36a, 36b) sont disposés symétriquement par rapport à l'axe longitudinal (Y) du véhicule.

7. Véhicule automobile selon l'une quelconque des revendications précédentes, dans lequel le système de protection (30) est fixé par le biais de points de soudure sur le plancher du véhicule (12).

8. Véhicule automobile selon l'une quelconque des revendications précédentes, dans lequel le deuxième compartiment (20) est configuré pour recevoir une roue de secours (22).

9. Véhicule automobile selon l'une quelconque des revendications 1 à 7, dans lequel le deuxième compartiment (20) est configuré pour recevoir un réservoir de gaz de pétrole liquéfié (24).

## Patentansprüche

1. Kraftfahrzeug, umfassend einen Boden (12), der eine erste Kammer (16) zur Aufnahme eines Kraftstofftanks (18) und eine zweite Kammer (20) stromaufwärts der ersten Kammer (16) umfasst, die von der Kammer durch eine Hinterachse (26) getrennt ist, mit der zwei Hinterräder (14) verbunden sind, **dadurch gekennzeichnet, dass** es ein Schutzsystem (30) umfasst, das an der Außenfläche des Bodens montiert und dazu konfiguriert ist, die zweite Kammer (20) bei einem Aufprall auf das Heck des Fahrzeug nach oben abzulenken.

2. Kraftfahrzeug nach Anspruch 1, wobei das Schutzsystem (30) einen Karosseriebegrenzer (32), der an der unteren Außenfläche der zweiten Kammer (20) montiert ist und durch zwei an der Hinterachse (26) befestigte Verstärkungen (34a, 34b) in Position gehalten wird, und zwei an der Hinterachse (26) montierte Hinterachsenbegrenzer (36a, 36b) umfasst.

3. Kraftfahrzeug nach Anspruch 2, wobei der Karosseriebegrenzer (32) die Form eines tiefgezogenen Bauteils aufweist, das einen ersten Teil (32a), der sich in einer Längsrichtung erstreckt und an der unteren Fläche der zweiten Kammer (20) befestigt ist, und einen zweiten Teil (32c), der sich vom ersten Teil (32a) aus entlang einer vertikalen Achse (Z) erstreckt und an der vertikalen Fläche der zweiten Kammer (20) befestigt ist, umfasst.

4. Kraftfahrzeug nach Anspruch 3, wobei der erste Teil (32a) einen tiefgezogenen Teil (32b) umfasst, der sich entlang der vertikalen Achse (Z) nach unten erstreckt.

5. Kraftfahrzeug nach Anspruch 3 oder 4, wobei der zweite Teil (32c) des Karosseriebegrenzers (32) fest mit den beiden Verstärkungen (32a, 32b) verbunden ist, die symmetrisch zur Längsachse (X) des Fahrzeugs angeordnet sind.

6. Kraftfahrzeug nach einem der Ansprüche 2 bis 5, wobei die beiden Hinterachsenbegrenzer (36a, 36b) symmetrisch zur Längsachse (Y) des Fahrzeugs angeordnet sind.

7. Kraftfahrzeug nach einem der vorangehenden Ansprüche, wobei das Schutzsystem (30) anhand von Schweißpunkten am Fahrzeugboden (12) befestigt ist.

8. Kraftfahrzeug nach einem der vorangehenden Ansprüche, wobei die zweite Kammer (20) dazu konfiguriert ist, ein Reserverad (22) aufzunehmen.

9. Kraftfahrzeug nach einem der Ansprüche 1 bis 7, wobei die zweite Kammer (20) dazu konfiguriert ist, einen Flüssiggastank (24) aufzunehmen.

## Claims

1. Motor vehicle comprising a floor (12) comprising a first compartment (16) for receiving a fuel tank (18) and a second compartment (20), which is upstream of said first compartment (16) and is separated from said compartment by a rear axle (26) to which two rear wheels (14) are connected, said vehicle being **characterized in that** it comprises a protection system (30) mounted on the outer surface of the floor and configured to deflect the second compartment (20) upwards in the event of an impact to the rear of the vehicle.

2. Motor vehicle according to Claim 1, wherein the protection system (30) comprises a bodyshell limiter (32) mounted on the outer lower surface of the second compartment (20) and held in position by two reinforcements (34a, 34b) fastened to the rear axle (26) and two rear axle assembly limiters (36a, 36b) mounted on the rear axle (26).

3. Motor vehicle according to Claim 2, wherein the bodyshell limiter (32) is in the form of a pressing comprising a first portion (32a), which extends along the longitudinal direction and is fastened to the lower surface of the second compartment (20), and a second portion (32c), which extends from the first portion (32a) along a vertical axis (Z) and is fastened to the vertical surface of the second compartment (20).

4. Motor vehicle according to Claim 3, wherein the first portion (32a) comprises a pressed portion (32b) extending downwards along the vertical axis (Z).

5. Motor vehicle according to Claim 3 or 4, wherein the second portion (32c) of the bodyshell limiter (32) is secured to the two reinforcements (32a, 32b), which are arranged symmetrically with respect to the longitudinal axis (X) of the vehicle.

6. Motor vehicle according to any one of Claims 2 to 5, wherein the two rear axle assembly limiters (36a, 36b) are arranged symmetrically with respect to the longitudinal axis (Y) of the vehicle.

7. Motor vehicle according to any one of the preceding claims, wherein the protection system (30) is fastened to the floor of the vehicle (12) by means of spot welds.

8. Motor vehicle according to any one of the preceding claims, wherein the second compartment (20) is configured to receive a spare wheel (22).

9. Motor vehicle according to any one of Claims 1 to 7, wherein the second compartment (20) is configured to receive a liquefied petroleum gas tank (24).
